# FASCICULE DE BREVET EUROPEEN

(11) **EP 0 783 928 B1**
(45) Date de publication et mention de la délivrance du brevet: **24.10.2001**
(21) Numéro de dépôt: 97400030.9
(22) Date de dépôt: 08.01.1997
(51) Int. Cl.: B21D 39/04

(54) **Procédé pour l'emmanchement en croix d'une pièce au moins localement cylindrique dans une pièce tubulaire, outillage propre à la mise en oeuvre de ce procédé et son utilisation**
Verfahren zum kreuzförmigen Eindrücken eines zumindest örtlich zylindrisch geformten Werkstückes in ein rohrförmiges Werkstück, dafür geeignetes Werkzeug sowie Verwendung des Werkzeuges
Method of crosspressing an at least locally cylindrical-formed workpiece into a tubular workpiece, tool for its application and use of the tool

(30) Priorité: 10.01.1996 FR 9600229
(43) Date de publication de la demande: 16.07.1997
(73) Titulaire: VALLOUREC COMPOSANTS AUTOMOBILES VITRY, 51300 Vitry le Francois (FR)
(72) Inventeur: Valin, Daniel, 51300 St Amand-Sur-Fion (FR)
(74) Mandataire: CABINET BONNET-THIRION

(56) Documents cités:
- EP-A- 0 036 377
- CH-A- 383 303
- FR-A- 2 528 132
- GB-A- 2 090 550
- US-A- 3 545 072

## Description

La présente invention concerne un procédé pour l'emmanchement à force d'une pièce au moins localement cylindrique dans une pièce tubulaire globalement transversalement par rapport à celle-ci, selon le préambule de la revendication 1.

Par pièce au moins localement cylindrique, on entend ici une pièce dont la surface extérieure est, au moins localement, au niveau de son emmanchement avec la pièce tubulaire, une surface cylindrique, c'est-à-dire une surface qui, quelle que soit la nature, circulaire ou autre, du contour de sa section transversale, est formée de génératrices parallèles.

Cette pièce au moins localement cylindrique qui, par-mesure de commodité, sera dite ci-après plus simplement pièce cylindrique, peut être pleine, creuse ou tubulaire.

Dans le cas d'une pièce creuse ou tubulaire, elle peut servir de logement à au moins un quelconque autre composant.

Les ensembles formés d'une telle pièce cylindrique emmanchée en croix dans une pièce tubulaire trouvent notamment leur application pour l'assemblage d'une de ces pièces à l'autre, par exemple dans la construction automobile.

Pour leur emmanchement, on pratique au travers de la pièce tubulaire un trou apte à envelopper le contour hors tout de la pièce cylindrique, et, par exemple, à la presse, on soumet conjointement cette pièce cylindrique et cette pièce tubulaire à un mouvement relatif dont il résulte que la pièce cylindrique s'engage sous contrainte dans le trou de la pièce tubulaire d'un côté de celle-ci cependant que la pièce tubulaire est contrebutée extérieurement du côté opposé au précédent.

Du fait de sa structure tubulaire, la pièce tubulaire forme globalement deux cloisons autour de son trou.

Au cours de l'emmanchement de la pièce cylindrique, celle de ces cloisons qui est située du côté de l'engagement de la pièce cylindrique encaisse au premier chef l'effort d'emmanchement, et il s'avère, dans la pratique, qu'elle peut de ce fait être l'objet d'une certaine déformation.

Il en résulte que, au moins localement, la section transversale de la pièce tubulaire autour de son trou se trouve modifiée, ce qui peut être préjudiciable à la qualité de la liaison mécanique normalement assurée entre la pièce cylindrique et cette pièce tubulaire, et, en toute hypothèse, la déformation, ainsi apparente, de la pièce tubulaire ne peut manquer de jeter un certain discrédit sur cette qualité.

Il convient donc normalement de mettre au rebut l'ensemble formé lorsque la pièce tubulaire qu'il comporte présente ainsi une telle déformation.

La présente invention a d'une manière générale pour objet une disposition permettant avantageusement d'éviter cette déformation.

Cet objet est atteint par un procédé pour l'emmanchement à force d'une pièce au moins localement, cylindrique dans une pièce tubulaire globalement transversalement par rapport à celle-ci, ce procédé étant du genre suivant lequel, un trou enveloppe du contour hors tout de la pièce cylindrique traversant de part en part la pièce tubulaire, on soumet conjointement la pièce cylindrique et la pièce tubulaire à un mouvement relatif dont il résulte que la pièce cylindrique s'engage sous contrainte dans le trou de la pièce tubulaire d'un côté de celle-ci cependant que cette pièce tubulaire est contrebutée extérieurement du côté opposé au précédent, et étant caractérisé en ce que, préalablement à l'engagement de la pièce cylindrique dans le trou de la pièce tubulaire, on insère dans la pièce tubulaire, à la faveur de son trou, une cale entretoise apte à la contrebuter intérieurement au voisinage de ce trou, sur une portion au moins du périmètre de celui-ci, en faisant en sorte que la cale entretoise ainsi mise en place dans la pièce tubulaire se maintienne à demeure dans celle-ci.

Pour l'insertion de cette cale entretoise, on pourrait songer à l'introduire par l'une ou l'autre des extrémités de la pièce tubulaire.

Mais, outre que, pour être complète, cette disposition nécessiterait d'intervenir, de manière dispendieuse et complexe, à l'une et l'autre des extrémités de la pièce tubulaire, elle se trouve impossible à mettre en oeuvre lorsque la pièce tubulaire est, par exemple, une pièce longiligne, c'est-à-dire une pièce suffisamment longue pour que le trou dans lequel doit être engagée la pièce cylindrique soit trop éloigné de l'une et l'autre de ses extrémités pour qu'il soit possible d'intervenir au niveau de ce trou à partir de l'une quelconque de ces dernières.

Il est donc prévu, suivant l'invention, d'insérer la cale entretoise dans la pièce tubulaire à la faveur même du trou dans lequel doit être engagée la pièce cylindrique.

En pratique, il est prévu, pour ce faire, suivant l'invention, d'engager d'abord axialement la cale entretoise dans le trou de la pièce tubulaire, puis de la refouler radialement entre les deux cloisons que la pièce tubulaire forme autour de ce trou.

Quoi qu'il en soit, du fait de la présence de cette cale entretoise au sein de la pièce tubulaire avant l'engagement de la pièce cylindrique dans son trou, celle des cloisons de cette pièce tubulaire qui se situe du côté de l'engagement de la pièce cylindrique se trouve avantageusement contrebutée intérieurement, ce qui, de manière très efficace, empêche qu'elle soit l'objet d'une quelconque déformation.

La présente invention a encore pour objets, d'une part, un outillage propre à la mise en place d'une telle cale entretoise tel que défini dans la revendication 12, et, d'autre part, l'utilisation d'un outillage pour l'insertion de ladite cale pour la mise en oeuvre du procédé de l'invention, selon la revendication 13.

Les objets de l'invention, leurs caractéristiques et leurs avantages, ressortiront d'ailleurs de la description qui va suivre, à titre d'exemple, en référence aux dessins schématiques annexés sur lesquels :
la figure 1 est une vue en perspective d'un ensemble formé de deux pièces emmanchées en croix suivant l'invention ;
la figure 2 est, à échelle supérieure, une vue partielle en coupe longitudinale de cet ensemble, suivant le plan II-II de la figure 1 ;
la figure 3 est, représentée dans son état initial, une vue en perspective de la cale entretoise mise en oeuvre suivant l'invention ;
la figure 4 est une vue en plan de cette cale, suivant la flèche IV de la figure 3 ;
les figures 5 et 6 en sont deux vues en section axiale, suivant, chacune respectivement, les plans V-V et VI-VI de la figure 4 ;
les figures 7A, 7B, 7C et 7D sont des vues partielles en coupe longitudinale, qui, analogues à celle de la figure 2, illustrent, à échelle différente, diverses étapes successives de la mise en place de la cale entretoise suivant l'invention entre les deux cloisons de la pièce tubulaire dans laquelle elle doit être insérée ;
- la figure 8 est une vue partielle en plan de cette pièce tubulaire ainsi équipée de cette cale entretoise, suivant la flèche VIII de la figure 7D ;
la figure 9 est une vue partielle en coupe longitudinale qui, analogue à celles des figures 7A, 7B, 7C et 7D, illustre l'engagement à force de la pièce cylindrique dans le trou de la pièce tubulaire ;
la figure 10 est une vue en plan analogue à celle de la figure 4, pour une variante de réalisation de la cale entretoise suivant l'invention ;
la figure 11 est une vue en plan d'une autre variante de réalisation de cette cale entretoise.

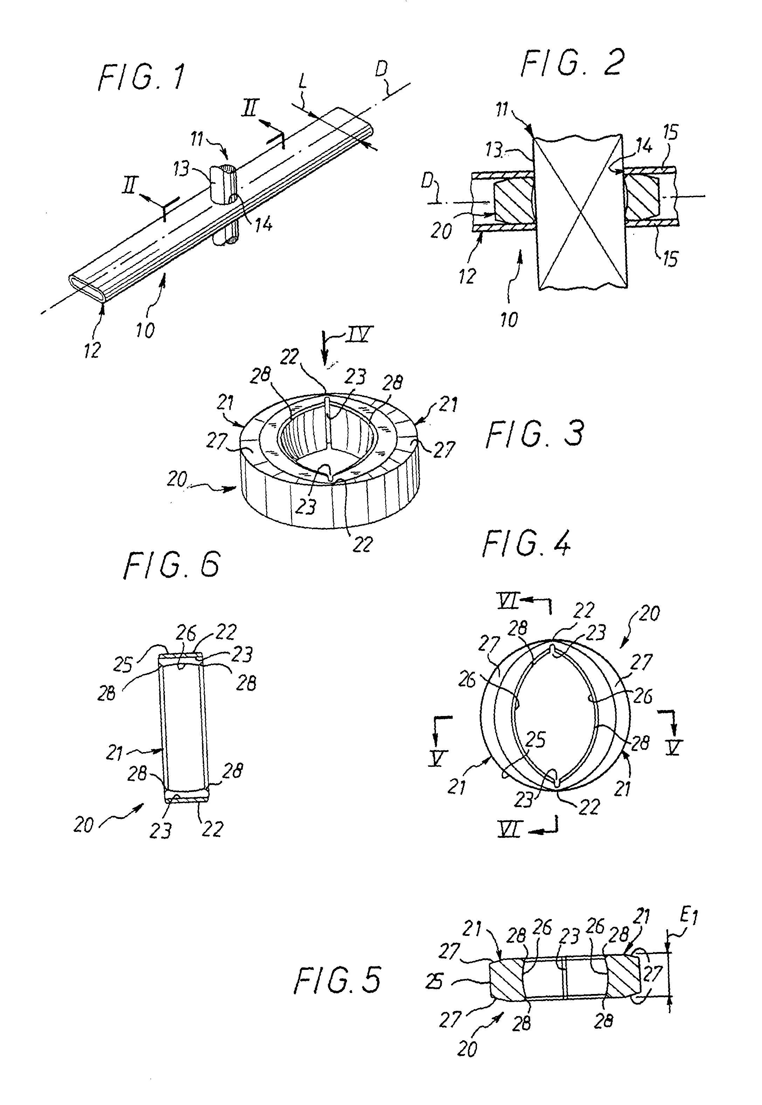

Tel qu'illustré sur ces figures, il s'agit, globalement, de la réalisation d'un ensemble 10, qui, ainsi qu'il est mieux visible sur la figure 1, est formé de deux pièces emmanchées en croix, à savoir une pièce cylindrique 11 et une pièce tubulaire 12.

Comme précisé ci-dessus, la pièce cylindrique 11 est d'une manière générale définie comme étant une pièce dont la surface extérieure 13 est au moins localement, au niveau de son emmanchement avec la pièce tubulaire 12, une surface cylindrique.

Dans la forme de réalisation représentée, la section transversale de cette surface extérieure 13 est supposée être circulaire, et continue.

Mais elle peut tout aussi bien avoir un autre contour, et/ou être plus ou moins échancrée.

Dans la forme de réalisation représentée, la pièce cylindrique 11 est supposée par ailleurs être pleine, à la manière d'une barre.

Mais il pourrait tout aussi bien s'agir d'une pièce creuse, et par exemple tubulaire, à la manière de la pièce tubulaire 12.

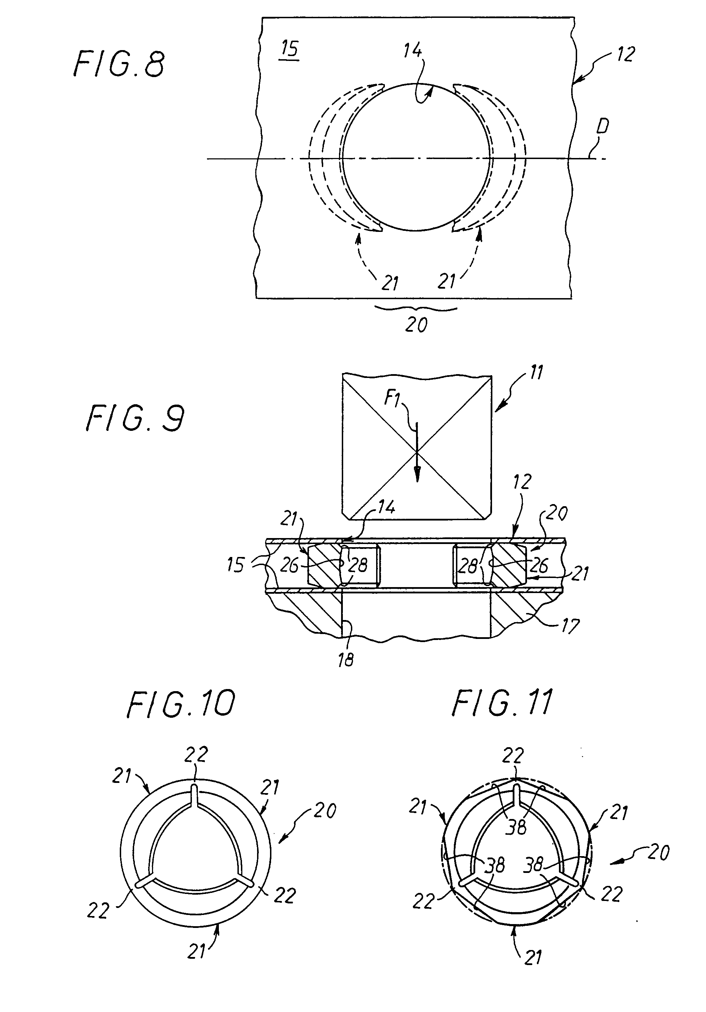

C'est la raison pour laquelle, sur les figures 2 et 9, son volume a, de manière conventionnelle, été barré.

Lorsque la pièce cylindrique 11 est une pièce tubulaire de section transversale circulaire, elle peut, par exemple, servir par elle-même de moyeu à un quelconque axe ou servir de logement à un tel moyeu.

Dans la forme de réalisation représentée, la pièce tubulaire 12 est, quant à elle, et à titre d'exemple, une pièce longiligne.

Autrement dit, il s'agit, dans cette forme de réalisation, d'une pièce qui, d'une part, est allongée, suivant une direction d'allongement D schématisée en traits interrompus sur les figures 1, 2 et 8, et qui, d'autre part, est mince.

En outre, sa section et son épaisseur peuvent être uniformes ou variables.

Dans la forme de réalisation représentée, cette pièce tubulaire 12 est rectiligne, ou sensiblement rectiligne.

Mais il n'en est pas obligatoirement ainsi.

Au contraire, cette pièce tubulaire 12 peut tout aussi bien être plus ou moins courbe ou cintrée.

Cette pièce tubulaire 12 présente, globalement transversalement, et, plus précisément, globalement transversalement par rapport à sa direction d'allongement D, pour l'intervention de la pièce cylindrique 11, un trou 14, qui, enveloppe du contour hors tout de la pièce cylindrique 11, la traverse de part en part, et dans lequel la pièce cylindrique 11 est engagée à force.

Dans la forme de réalisation représentée, le trou 14 intervient, à titre d'exemple, à distance de l'une et de l'autre des extrémités de la pièce tubulaire 12.

Mais il n'en est pas nécessairement ainsi.

Dans la forme de réalisation représentée, la pièce tubulaire 12 forme, par ailleurs, un profilé dont la section transversale, uniforme sur toute sa longueur, est globalement aplatie en boutonnière, sensiblement perpendiculairement aux génératrices de la pièce cylindrique 11.

Mais il n'en est pas non plus nécessairement ainsi.

Au contraire, la section transversale de cette pièce tubulaire 12 peut être quelconque, et/ou être modulée suivant sa longueur.

Il suffit que, perpendiculairement aux génératrices de la pièce cylindrique 11, elle présente une largeur L suffisante pour pouvoir recevoir cette pièce cylindrique 11.

Quoi qu'il en soit, la pièce tubulaire 12 forme, autour de son trou 14, deux cloisons 15.

Dans la forme de réalisation représentée, et compte tenu de ce qui précède, ces deux cloisons 15 sont, au moins au voisinage du trou 14, l'une et l'autre sensiblement planes, et parallèles entre elles.

Mais il n'en est pas forcément ainsi.

Dans la forme de réalisation représentée, les cloisons 15 sont en outre sensiblement perpendiculaires aux génératrices de la pièce cylindrique 11.

Mais il n'en est pas non plus forcément ainsi.

De manière connue en soi, pour l'emmanchement de la pièce cylindrique 11 dans la pièce tubulaire 12, et tel que représenté à la figure 9, on soumet conjointement cette pièce cylindrique 11 et cette pièce tubulaire 12 à un mouvement relatif dont il résulte que la pièce cylindrique 11 s'engage sous contrainte dans le trou 14 de la pièce tubulaire 12, d'un côté de celle-ci, suivant la flèche F1 de la figure 9, cependant que cette pièce tubulaire 12 est contrebutée extérieurement du côté opposé au précédent.

En pratique, il est procédé, pour ce faire, à la presse.

Tel que représenté à la figure 9, la pièce tubulaire 12 repose alors par exemple sur la table 17 de cette presse, en étant dûment solidarisée à celle-ci, et en ayant son trou 14 à l'aplomb d'un dégagement 18 prévu de manière complémentaire sur cette table 17, et, conjointement, la pièce cylindrique 11 est rapportée sur le piston, non représenté, de cette presse.

Suivant l'invention, on insère dans la pièce tubulaire 12, préalablement à l'engagement de la pièce cylindrique 11 dans le trou 14 de celle-ci, une cale entretoise 20, qui est apte à la contrebuter intérieurement au voisinage de ce trou 14 sur une portion au moins du périmètre de celui-ci, et qui, donc, est adaptée à la forme et/ou à la section du profil de cette pièce tubulaire 12 au voisinage de son trou 14, en faisant en sorte que la cale entretoise 20 ainsi mise en place dans la pièce tubulaire 12 se maintienne ensuite à demeure dans celle-ci.

Préférentiellement, et tel que représenté, on choisit pour cale entretoise 20 une cale entretoise qui, pour être susceptible d'une expansion radiale, pour des raisons qui seront explicitées ultérieurement, est formée annulairement d'au moins deux segments 21.

Dans la forme de réalisation plus particulièrement représentée sur les figures 1 à 9, seuls deux segments 21 sont prévus, et, la calé entretoise 20 étant globalement annulaire, ils s'étendent chacun suivant sensiblement 180°.

En outre, dans cette forme de réalisation, et tel que représenté sur les figures 3 à 6, ces segments 21 sont initialement rattachés annulairement l'un à l'autre de manière sécable.

En pratique, la cale entretoise 20 comporte, pour ce faire, aux extrémités d'un diamètre, deux zones de moindre résistance 22 dues à ce que, sur son bord interne, elle est entaillée par deux gorges 23 qui courent sur toute sa hauteur.

Préférentiellement, on choisit pour cale entretoise 20 une cale entretoise dont le bord externe 25, ou, plus précisément, celui de chacun de ses segments 21, a, en plan, un contour hors tout similaire à celui du trou 14 de la pièce tubulaire 12.

Dans la forme de réalisation représentée, le bord externe 25 de la cale entretoise 20 a donc un contour circulaire, au diamètre du trou 14 de la pièce tubulaire 12.

De même, on choisit pour cale entretoise 20 une cale entretoise dont le bord interne 26, ou, plus précisément, celui de chacun de ses segments 21, a, en plan, un contour hors tout similaire à celui du trou 14 de la pièce tubulaire 12.

Dans la forme de réalisation représentée, le bord interne 26 de la cale entretoise 20 a donc lui aussi un contour circulaire, au diamètre du trou 14 de la pièce tubulaire 12.

Préférentiellement, enfin, on choisit pour cale entretoise 20 une cale entretoise apte à se coincer à force entre les deux cloisons 15 que la pièce tubulaire 12 forme autour de son trou 14.

Par exemple, et tel que représenté, la cale entretoise 20, ou, plus précisément, chacun de ses segments 21, présente, à sa périphérie externe, sur l'une au moins de ses faces, et, en pratique, sur chacune de celles-ci, un chanfrein d'engagement 27.

Dans la forme de réalisation représentée, ce chanfrein d'engagement 27 a, en plan, un contour en croissant, figures 3 et 4.

Quoi qu'il en soit, de l'une à l'autre des deux faces de la cale entretoise 20, les chanfreins d'engagement 27 d'un même segment 21 convergent globalement l'un vers l'autre de l'intérieur de la cale entretoise 20 vers l'extérieur de celle-ci.

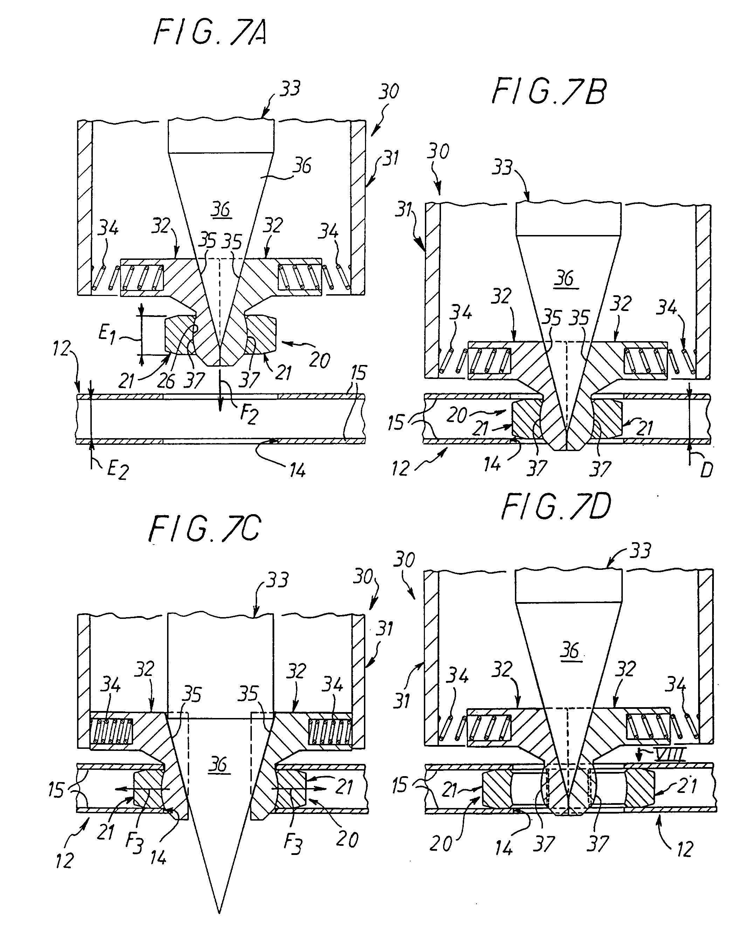

L'épaisseur E1, figure 5 et 7A, que présente la cale entretoise 20 de l'une à l'autre de ses faces abstraction faite de ses chanfreins d'engagement 27, est sensiblement égale à la distance E2, figure 7A, séparant intérieurement au repos l'une de l'autre les deux cloisons 15 que la pièce tubulaire 12 forme autour de son trou 14, tout en étant légèrement supérieure à cette distance E2.

Dans la forme de réalisation représentée, la cale entretoise 20, et, plus précisément, chacun des segments 21 de celle-ci, présente, aussi, à sa périphérie interne, sur l'une au moins de ses faces, et, en pratique, sur l'une et l'autre de celles-ci, un chanfrein 28.

Ce chanfrein 28 a, radialement, une extension réduite, très inférieure à celle des chanfreins d'engagement 27.

De l'une à l'autre des deux faces de la cale entretoise 20, les chanfreins 28 d'un même segment 21 convergent l'un vers l'autre de l'extérieur de cette cale entretoise 20 vers l'intérieur de celle-ci.

Dans la forme de réalisation représentée, et pour des raisons qui apparaîtront ci-après, le bord interne 26 de la cale entretoise 20, et, plus précisément, celui de chacun de ses segments 21, a, en section axiale, un profil concave.

Par exemple, et tel que représenté, la section axiale de ce bord interne 26 est circulaire.

La cale entretoise 20 mise en oeuvre suivant l'invention est, par exemple, en matière synthétique dure résistante à la compression.

Dans les formes de réalisation représentées, elle a un plan de symétrie perpendiculairement à son axe, c'est-à-dire perpendiculairement à l'axe de l'anneau qu'elle forme.

Suivant l'invention, on insère cette cale entretoise 20 dans la pièce tubulaire 12 à la faveur du trou 14 de celle-ci.

De manière plus détaillée, pour l'insertion, suivant l'invention, de la cale entretoise 20 dans la pièce tubulaire 12, on engage d'abord axialement cette cale entretoise 20 dans le trou 14 de cette pièce tubulaire 12, suivant la flèche F2 de la figure 7A, et, suivant les flèches de sens opposés F3 de la figure 7C, on la refoule ensuite radialement entre les deux cloisons 15 que la pièce tubulaire 12 forme autour de ce trou 14.

Pour cette insertion, il peut par exemple être mis en oeuvre un outillage 30 du type de celui schématiquement représenté sur les figures 7A, 7B, 7C et 7D.

Cet outillage 30, qui intervient à la manière d'un manipulateur, comporte, globalement, un support 31, par exemple en forme de caisson ouvert vers le bas, au moins deux mors 32, qui sont montés mobiles radialement sur ce support 31, entre une position rapprochée pour laquelle, tel que représenté sur les figures 7A et 7B, ils sont aptes à recevoir conjointement la cale entretoise 20, par le bord interne 26 de celle-ci, et une position écartée pour laquelle, tel que représenté sur la figure 7C, ils sont aptes à insérer cette cale entretoise 20 dans la pièce tubulaire 12, et des moyens de commande 33, qui sont propres à l'actionnement de ces mors 32.

En pratique, les mors 32 sont en permanence sollicités élastiquement en direction de leur position rapprochée par des ressorts 34 qui prennent appui sur le support 31, ils présentent, sur leur bord interne, une surface conique ou tronconique 35, et leurs moyens de commande 33 sont constitués par une came, qui comporte une surface conique ou tronconique 36 complémentaire de leur surface conique ou tronconique 35, et qui est propre à s'insérer entre eux.

Dans la forme de réalisation représentée, pour le maintien de la cale entretoise 20 sur les mors 32, il est prévu, entre cette cale entretoise 20 et chacun de ces mors 32, des moyens d'emboîtement complémentaires.

En pratique, ces moyens d'emboîtement complémentaires résultent de ce que les mors 32 forment, sur leur bord externe, une surface saillante 37 à profil convexe complémentaire du profil concave du bord interne 26 des segments 21 de la cale entretoise 20.

Dans un premier temps, la cale entretoise 20 est simplement engagée à force, sans rupture de ses zones de moindre résistance 22, sur les mors 32, alors en position rapprochée, tel que représenté sur la figure 7A.

Portée par ces mors 32, la cale entretoise 20 est ensuite introduite dans le trou 14 de la pièce tubulaire 12, suivant la flèche F2 de la figure 7A, jusqu'à venir au droit du volume intérieur de cette pièce tubulaire 12, à égale distance des cloisons 15 qu'elle forme autour du trou 14, tel que représenté sur la figure 7B.

Par entrée en action de leurs moyens de commande 33, les mors 32 sont ensuite écartés l'un de l'autre, tel que représenté sur la figure 7C, ce qui soumet la cale entretoise 20 à une sollicitation d'expansion radiale conduisant les segments 21 qui la constituent à se séparer l'un de l'autre et à s'engager à force entre les cloisons 15 de la pièce tubulaire 12.

La cale entretoise 20 suivant l'invention, ainsi mise en place à la faveur du trou 14 de la pièce tubulaire 12, se trouve dès lors fragmentée annulairement en autant de segments 21 qu'elle en comporte, et donc, en l'espèce, en deux segments 21.

Par retrait des moyens de commande 33, il suffit ensuite d'assurer le retour en position rapprochée des mors 32, tel que représenté sur la figure 7D, puis de dégager le support 31, pour laisser la place à la pièce cylindrique 11, tel que représenté sur la figure 9.

Du fait de son épaisseur E1, et des chanfreins 28 qu'elle comporte, la cale entretoise 20, ou, plus précisément, les segments 21 qui la constituent provoquent, à leur insertion, dans la pièce tubulaire 12, un léger écartement l'une de l'autre des cloisons 15 de cette pièce tubulaire 12.

Il en résulte que, par relaxation, ils sont ensuite l'objet d'un effort axial de serrage de la part de ces cloisons 15, et, en pratique, cet effort axial de serrage suffit à leur maintien.

Du fait du contour circulaire de son bord externe 25, la cale entretoise 20 s'engage au mieux dans le trou 14 de la pièce tubulaire 12 tout en présentant un diamètre externe maximal, et, du fait du contour circulaire de son bord interne 26, les segments 21 auxquels elle donne naissance épousent ensuite au mieux le contour de ce trou 14, en s'étendant au plus près de celui-ci.

Préférentiellement, et ainsi qu'il ressort de la figure 8, il est fait en sorte que la cale entretoise 20 intervienne suivant la direction d'allongement D de la pièce tubulaire 12, à l'une des extrémités, au moins, du diamètre du trou 14 de celle-ci parallèle à cette direction d'allongement D.

En pratique, il est fait en sorte que, comme représenté sur la figure 8, les segments 21 de cette cale entretoise 20 interviennent chacun respectivement à l'une et l'autre des extrémité de ce diamètre.

Il ressort de la figure 8 que, dans la forme de réalisation représentée, la cale entretoise 20 formée des segments 21 s'étend sur une portion du périmètre du trou 14 de la pièce tubulaire 12 au moins égale aux deux tiers de ce périmètre.

Lors de l'engagement de la pièce cylindrique 11 dans le trou 14 de la pièce tubulaire 12, les segments 21 de la cale entretoise 20 contrebutent avantageusement, intérieurement, la cloison 15 de la pièce tubulaire 12 qui se situe du côté de la pièce cylindrique 11, en prenant pour ce faire appui sur la cloison 15 située du côté opposé, celle-ci se trouvant elle-même contrebutée, extérieurement, par la table 17 de la presse mise en oeuvre.

Les segments 21 de la cale entretoise 20 constituent ensuite des pièces perdues, qui restent au sein de l'ensemble 10 alors constitué.

Ainsi qu'il est aisé de le comprendre, si, après leur pose, ces segments 21 mordent encore légèrement sur le trou 14 de la pièce tubulaire 12, ils se trouvent refoulés plus complètement dans celle-ci par la pièce cylindrique 11 lors de l'emmanchement de cette dernière, et le chanfrein 28 qu'ils présentent sur leur bord interne 26 facilite ce refoulement.

Ainsi qu'il est également aisé de le comprendre, du fait de sa symétrie perpendiculairement à son axe, la cale entretoise 20 est avantageusement réversible et peut ainsi être indifféremment mise en oeuvre dans un sens ou dans l'autre.

Dans les formes de réalisation représentées sur les figures 10 et 11, la cale entretoise 20 est formée de trois segments 21 qui sont initialement rattachés annulairement les uns aux autres de manière sécable par des zones de moindre résistance 22.

En outre, dans la forme de réalisation représentée sur la figure 11, ces segments 21 ont leur bord externe 25 abattu par des méplats 38 formant un dièdre entre eux.

Pour le reste, les dispositions sont les mêmes que les précédentes.

Mais, après sa pose, la cale entretoise 20 se trouve plus uniformément répartie autour du trou 14 de la pièce tubulaire 12.

Bien entendu, la présente invention ne se limite d'ailleurs pas aux formes de réalisation décrites et représentées, ni à la forme de mise en oeuvre également décrite et représentée, mais englobe bien entendu toute variante d'exécution.

En particulier, le trou de la pièce tubulaire n'épouse pas nécessairement dans tous ses détails la forme de la périphérie de la pièce cylindrique.

Autrement dit, il n'y a pas nécessairement en tout point un contact continu entre ce trou et cette périphérie.

Il suffit que, par son contour, hors tout, le trou de la pièce tubulaire soit à même d'envelopper le contour hors tout de la périphérie, c'est-à-dire de la section transversale, de la pièce cylindrique.

En outre, au lieu d'être initialement d'un seul tenant les uns avec les autres, les segments constitutifs de la-cale entretoise suivant l'invention peuvent tout aussi bien former dès l'origine des pièces distinctes, en étant alors par exemple conjointement ceinturés par une frette élastique pour leur maintien.

Comme les segments eux-mêmes, cette frette élastique forme ensuite une pièce perdue.

## Revendications

1. Procédé pour l'emmanchement à force d'une pièce au moins localement cylindrique (11) dans une pièce tubulaire (12) globalement transversalement par rapport à celle-ci, du genre suivant lequel, un trou (14) enveloppe du contour hors tout de la pièce cylindrique (11) traversant de part en part la pièce tubulaire (12), on soumet conjointement la pièce cylindrique (11) et la pièce tubulaire (12) à un mouvement relatif dont il résulte que la pièce cylindrique (11) s'engage sous contrainte dans le trou (14) de la pièce tubulaire (12) d'un côté de celle-ci cependant que cette pièce tubulaire (12) est contrebutée extérieurement du côté opposé au précédent, **caractérisé en ce que**, préalablement à l'engagement de la pièce cylindrique (11) dans le trou (14) de la pièce tubulaire (12), on insère dans la pièce tubulaire (12), à la faveur de son trou (14), une cale entretoise (20) apte à la contrebuter intérieurement au voisinage de ce trou (14), sur une portion au moins du périmètre de celui-ci, en faisant en sorte que la cale entretoise (20) ainsi mise en place dans la pièce tubulaire (12) se maintienne à demeure dans celle-ci.

2. Procédé suivant la revendication 1, **caractérisé en ce que**, pour l'insertion de la cale entretoise (20) dans la pièce tubulaire (12), on engage d'abord axialement cette cale entretoise (20) dans le trou (14) de cette pièce tubulaire (12), et on la refoule ensuite radialement entre les deux cloisons (15) que la pièce tubulaire (12) forme autour de ce trou (14).

3. Procédé suivant l'une quelconque des revendications 1, 2, **caractérisé en ce qu'**il est fait en sorte que la cale entretoise (20) insérée dans la pièce tubulaire (12) intervienne suivant la direction d'allongement (D) de celle-ci.

4. Procédé suivant l'une quelconque des revendications 1 à 3, **caractérisé en ce que** on choisit pour cale entretoise (20) une cale entretoise apte à se coincer à force entre les deux cloisons (15) que la pièce tubulaire (12) forme autour de son trou (14).

5. Procédé suivant la revendication 4, **caractérisé en ce que** on choisit pour cale entretoise (20) une cale entretoise présentant à sa périphérie externe un chanfrein d'engagement (27) sur l'une au moins de ses faces.

6. Procédé suivant l'une quelconque des revendications 1 à 5, **caractérisé en ce que** on choisit pour cale entretoise (20) une cale entretoise en matière synthétique dure résistante à la compression.

7. Procédé suivant l'une quelconque des revendications 1 à 6, **caractérisé en ce que** on choisit pour cale entretoise (20) une cale entretoise qui, pour être susceptible d'une expansion radiale, est formée annulairement d'au moins deux segments (21).

8. Procédé suivant la revendication 7, **caractérisé en ce que** on choisit pour cale entretoise (20) une cale entretoise dont les segments (21) sont initialement rattachés annulairement les uns aux autres de manière sécable.

9. Procédé suivant l'une quelconque des revendications 1 à 8, **caractérisé en ce que** on choisit pour cale entretoise (20) une cale entretoise dont le bord externe (25) a, en plan, un contour hors tout similaire à celui du trou (14) de la pièce tubulaire (12).

10. Procédé suivant l'une quelconque des revendications 1 à 9, **caractérisé en ce que** on choisit pour cale entretoise (20) une cale entretoise dont le bord interne (26) a, en plan, un contour hors tout similaire à celui du trou (14) de la pièce tubulaire (12).

11. Procédé suivant l'une des revendications 1 à 10, **caractérisé en ce que** l'on choisit pour cale entretoise (20) une cale entretoise dont le bord interne (26) a, en section axiale, un profil concave.

12. Outillage pour l'insertion d'une cale entretoise (20) dans une pièce tubulaire (12) pour la mise en oeuvre du procédé suivant la revendication 11, comportant un support (31), au moins deux mors (32), qui sont montés mobiles radialement sur le support (31), entre une position rapprochée pour laquelle ils sont aptes à recevoir conjointement la cale entretoise (20) par le bord interne (26) de celle-ci, et une position écartée pour laquelle ils sont aptes à insérer cette cale entretoise (20) dans la pièce tubulaire (12), et des moyens de commande (33), qui sont propres à l'actionnement de ces mors (32), **caractérisé en ce que**, pour le maintien de la cale entretoise (20) sur les mors (32), ceux-ci forment, sur leur bord externe, une surface saillante (37) à profil convexe complémentaire du profil concave du bord interne (26) de la cale entretoise (20).

13. Utilisation d'un outillage pour l'insertion d'une cale entretoise (20) dans une pièce tubulaire (12) pour la mise en oeuvre du procédé suivant l'une quelconque des revendications 1 à 11, dans laquelle l'outillage comporte un support (31), au moins deux mors (32), qui sont montés mobiles radialement sur le support (31), entre une position rapprochée pour laquelle ils sont aptes à recevoir conjointement la cale entretoise (20) par le bord interne (26) de celle-ci, et une position écartée pour laquelle ils sont aptes à insérer cette cale entretoise (20) dans la pièce tubulaire (12), et des moyens de commande (33), qui sont propres à l'actionnement de ces mors (32).

## Claims

1. A method of force fitting an at least locally cylindrical part (11) into a tubular part (12) substantially transversely to the latter, of the kind in which a hole (14) envelopes the overall contour of the cylindrical part (11) passing through the tubular part (12), the cylindrical part (11) and the tubular part (12) being conjointly caused to move relative to each other so that the cylindrical part (11) is forcibly engaged in the hole (14) in the tubular part (12) from one side of the latter whilst the tubular part (12) is braced externally on the opposite side, **characterised in that**, before the engagement of the cylindrical part (11) in the hole (14) in the tubular part (12), a spacer (20) is inserted into the tubular part (12) through the hole (14) and is adapted to brace it internally near the hole (14), along at least a portion of the perimeter thereof, it being arranged for the spacer (20) thus positioned in the tubular part (12) to remain fixed therein.

2. A method as claimed in Claim 1, **characterised in that**, to insert the spacer (20) in the tubular part (12), the spacer (20) is first axially engaged in the hole (14) in the tubular part (12) and is then radially expanded between the two walls (15) that the tubular part (12) forms around its hole (14).

3. A method as claimed in any one of Claims 1 or 2, **characterised in that** the spacer (20) inserted in the tubular part (12) is expanded in the lengthwise direction (D) thereof.

4. A method as claimed in any one of Claims 1 to 3, **characterised in that** the spacer (20) is adapted to be wedged between the two walls (15) that the tubular part (12) forms around its hole (14).

5. A method as claimed in Claim 4, **characterised in that** the spacer (20) has an insertion bevel (27) on its external periphery on at least one of its faces.

6. A method as claimed in any one of Claims 1 to 5, **characterised in that** the spacer (20) is made from hard synthetic material resistant to compression.

7. A method as claimed in any one of Claims 1 to 6, **characterised in that** the spacer (20) is formed annularly of at least two segments (21) so that it can be expanded radially.

8. A method as claimed in Claim 7, **characterised in that** the segments (21) of the spacer (20) are initially annularly attached to each other in a separable manner.

9. A method as claimed in any one of Claims 1 to 8, **characterised in that** the external edge (25) of the spacer (20) has an overall contour in plan view similar to that of the hole (14) of the tubular part (12).

10. A method as claimed in any one of Claims 1 to 9, **characterised in that** the internal edge (26) of the spacer (20) has an overall contour in plan view similar to that of the hole (14) of the tubular part (12).

11. A method as claimed in any one of Claims 1 to 10, **characterised in that** the internal edge (26) of the spacer (20) has a concave profile in axial section.

12. Tooling for the insertion of a spacer (20) into a tubular part (12) for the implementation of the method as claimed in Claim 11, comprising a support (31), at least two jaws (32) radially mobile on the support (31), between a close together position for which they are adapted to receive conjointly the spacer (20) by means of its internal edge (26), and a spaced apart position for which they are adapted to insert the spacer (20) into the tubular part (12), and operating means (33), which are adapted to actuate the jaws (32), **characterised in that**, for retaining the spacer (20) on the jaws (32), the latter form, on their external edge, a projecting surface (37) of convex profile that is complementary with the concave profile of the internal edge (26) of the spacer (20).

13. The use of tooling for the insertion of a spacer (20) into a tubular part (12) for the implementation of the method as claimed in any one of Claims 1 to 11, in which the tooling comprises a support (31), at least two jaws (32) radially mobile on the support (31), between a close together position for which they are adapted to receive conjointly the spacer (20) by means of its internal edge (26), and a spaced apart position for which they are adapted to insert the spacer (20) into the tubular part (12), and operating means (33), which are adapted to actuate the jaws (32).

## Patentansprüche

1. Verfahren zum Hineindrücken eines Teils (11), das wenigstens lokal zylindrisch ist, transversal in ein allgemein röhrenförmiges Teil (12), so dass ein Loch (14) den Gesamtumfang des zylindrischen Teils (11) umgibt, das auf beiden Seiten des röhrenförmigen Teils (12) übersteht, das zylindrische Teil (11) und das röhrenförmige Teil (12) gemeinsam einer relativen Bewegung unterworfen werden, die dazu führt, dass sich das zylindrische Teil (11) unter dieser Einwirkung in der Öffnung (14) des röhrenförmigen Teils (12) auf seiner einen Seite verklemmt, während das röhrenförmige Teil (12) außen auf der der obigen gegenüberliegenden Seite gegengehalten wird,
**dadurch gekennzeichnet, dass**
vor dem Verklemmen des zylindrischen Teils (11) in der Öffnung (14) des röhrenförmigen Teils (12) in das röhrenförmige Teil (12) durch seine Öffnung (14) ein Zwischenkeil (20) eingeführt wird, der innen in der Nähe zu der Öffnung (14) in einem Abschnitt, der sich wenigstens über seinen Umfang erstreckt, gegenhalten kann, so dass der Zwischenkeil (20), der so in dem röhrenförmigen Teil (12) angeordnet wurde, in ihm festgehalten wird.

2. Verfahren nach Anspruch 1, **dadurch gekennzeichnet, dass** für das Einführen des Zwischenkeils (20) in das röhrenförmige Teil (12) zuvor axial der Zwischenkeil (20) in der Öffnung (14) des röhrenförmigen Teils (12) verklemmt wird und anschließend radial zwischen den zwei Trennwänden (15) aufgefüllt wird, so dass sich das röhrenförmige Teil (12) um die Öffnung (14) formt.

3. Verfahren nach Anspruch 1 oder 2, **dadurch gekennzeichnet, dass** es so durchgeführt wird, dass der Zwischenkeil (20) nach dem Einführen in das röhrenförmige Teil (12) in Richtung von dessen Verlängerung (D) wirkt.

4. Verfahren nach einem der Ansprüche 1 bis 3, **dadurch gekennzeichnet, dass** als Zwischenkeil (20) ein Zwischenkeil gewählt wird, der unter Kraftausübung zwischen die zwei Trennwände (15) geklemmt werden kann, so dass sich das röhrenförmige Teil (12) um seine Öffnung (14) formt.

5. Verfahren nach Anspruch 4, **dadurch gekennzeichnet, dass** als Zwischenkeil (20) ein Zwischenkeil gewählt wird, der an seinem Außenrand auf wenigstens einer seiner Flächen eine Klemmfase (27) aufweist.

6. Verfahren nach einem der Ansprüche 1 bis 5, **dadurch gekennzeichnet, dass** als Zwischenkeil (20) ein Zwischenkeil aus synthetischem, festem, druckbeständigem Material gewählt wird.

7. Verfahren nach einem der Ansprüche 1 bis 6, **dadurch gekennzeichnet, dass** als Zwischenkeil (20) ein Zwischenkeil gewählt wird, der ringförmig aus wenigstens zwei Segmenten (21) zusammengesetzt ist, so dass er einer radialen Dehnung unterworfen werden kann.

8. Verfahren nach Anspruch 7, **dadurch gekennzeichnet, dass** als Zwischenkeil (20) ein Zwischenkeil gewählt wird, dessen Segmente (21) ursprünglich ringförmig teilbar miteinander verbunden sind.

9. Verfahren nach einem der Ansprüche 1 bis 8, **dadurch gekennzeichnet, dass** als Zwischenkeil (20) ein Zwischenkeil gewählt wird, dessen Außenkante (25) in der Ebene eine völlig andere Kontur als die Öffnung (14) des röhrenförmigen Teils (12) hat.

10. Verfahren nach einem der Ansprüche 1 bis 9, **dadurch gekennzeichnet, dass** als Zwischenkeil (20) ein Zwischenkeil gewählt wird, dessen Innenkante (26) in der Ebene eine völlig andere Kontur als die Öffnung des röhrenförmigen Teils (12) hat.

11. Verfahren nach einem der Ansprüche 1 bis 10, **dadurch gekennzeichnet, dass** als Zwischenkeil (20) ein Zwischenkeil gewählt wird, dessen Innenkante (26) im axialen Querschnitt ein konkaves Profil aufweist.

12. Werkzeug zum Einsetzen eines Zwischenkeils (20) in ein röhrenförmiges Teil (12) für das Umsetzen des Verfahrens nach Anspruch 11 mit einem Träger (31), wenigstens zwei Backen (32), die radial beweglich auf dem Träger (31) zwischen einer nahen Position, in der sie gemeinsam den Zwischenkeil (20) über ihre Innenkante (26) aufnehmen können, und einer entfernten Position, in der sie den Zwischenkeil (20) in das röhrenförmige Teil (12) einsetzen können, befestigt sind, und Steuervorrichtungen (33), die für das Betätigen der Backen (32) geeignet sind,
**dadurch gekennzeichnet, dass**
für das Halten des Zwischenkeils (20) auf den Backen (32) jene auf ihrer Außenkante eine vorspringende Oberfläche (37) mit konvexem Profil haben, das komplementär zu dem konkaven Profil der Innenkante (26) des Zwischenkeils (20) ist.

13. Verwendung eines Werkzeugs zum Einsetzen eines Zwischenkeils (20) in ein röhrenförmiges Teil (12) für das Umsetzen des Verfahrens nach Anspruch 11 mit einem Träger (31), wenigstens zwei Backen (32), die radial beweglich auf dem Träger (31) zwischen einer nahen Position, in der sie gemeinsam den Zwischenkeil (20) über ihre Innenkante (26) aufnehmen können, und einer entfernten Position, in der sie den Zwischenkeil (20) in das röhrenförmige Teil (12) einsetzen können, befestigt sind, und Steuervorrichtungen (33), die für das Betätigen dieser Bakken (32) geeignet sind.
